# FASCICULE DE BREVET EUROPEEN

(11) **EP 4 554 379 B1**
(45) Date de publication et mention de la délivrance du brevet: **27.05.2026**
(21) Numéro de dépôt: 23739581.9
(22) Date de dépôt: 11.07.2023
(51) Int. Cl.: A01N 31/02, A01P 13/00

(54) **UTILISATION D'UN ALCANEDIOL COMME HERBICIDE**
VERWENDUNG EINES ALKANDIOLS ALS HERBIZID
USE OF AN ALKANEDIOL AS HERBICIDE

(30) Priorité: 11.07.2022 BE 202205561
(43) Date de publication de la demande: 21.05.2025
(73) Titulaire: Apeo - Agronomical Plant Extracts & Essential Oils, 5030 Gembloux (BE)
(72) Inventeur: DAL MASO, Simon, 5100 Jambes (BE); JIJAKLI, Haissam, 5361 Scy (BE); FONCOUX, Bérénice, 6900 Marche-en-Famenne (BE)
(74) Mandataire: Gevers Patents
(86) Numéro de dépôt international: PCT/EP2023/069144
(87) Numéro de publication internationale: WO 2024/013148

(56) Documents cités:
- FR-A- 1 173 842
- KR-A- 20190 047 858
- US-A1- 2012 046 167

## Description

La présente invention porte sur une utilisation d'un composé de la famille des alcanediols comme herbicide.

De nos jours, les adventices ou mauvaises herbes sont documentées comme pouvant réduire les rendements des cultures et interférer avec les fonctions des plantes cultivées jusqu'à en arrêter la croissance. Les adventices sont constamment en concurrence avec les plantes cultivées pour ce qui est notamment des ressources en eau et en éléments nutritifs, réduisant par conséquent les rendements et la qualité des plantes cultivées. En ce sens, des pertes économiques pouvant atteindre 34% sont notées pour les principales cultures.

Actuellement, les méthodes de lutte contre les adventices les plus fiables comprennent le désherbage mécanique, le désherbage manuel et l'application d'herbicides.

Malheureusement, les applications d'herbicides posent plusieurs problèmes dont les principaux sont des impacts négatifs sur l'environnement et des impacts négatifs sur la santé animale et humaine. De plus, l'application systématique des mêmes molécules herbicides augmente la résistance des adventices, les méthodes alternatives (thermiques, mécaniques...) actuellement proposées étant peu efficaces et devant être répétées à intervalles très réguliers.

De nos jours, il existe donc un réel besoin de proposer et d'utiliser des composés herbicides alternatifs efficaces permettant de ne plus recourir à des molécules herbicides largement et systématiquement utilisées et pour lesquelles des problèmes de résistance sont fréquemment observés.

Pour résoudre au moins partiellement ces problèmes, la présente invention prévoit une utilisation d'un composé de la famille des alcanediols comme herbicide total, non sélectif ou sélectif, en particulier une utilisation d'un composé de la famille des alcanediols comme herbicide total, non sélectif ou sélectif pour obtenir un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal, ledit composé de la famille des alcanediols comportant au moins 5 atomes de carbone.

Plus particulièrement, la présente invention prévoit une utilisation d'un alcanediol comme herbicide total, non sélectif ou sélectif, en particulier une utilisation d'un alcanediol comme herbicide total, non sélectif ou sélectif pour obtenir un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal, ledit alcanediol comportant au moins 5 atomes de carbone.

Les alcanediols sont des composés organiques contenant deux groupes hydroxyles (-OH). Les alcanediols sont des composés cycliques ou linéaires ou ramifiés ne comprenant aucune insaturation.

Dans le cadre de la présente invention, il a été mis en évidence qu'une telle utilisation d'un composé de la famille des alcanediols comportant au moins 5 atomes de carbone comme herbicide total, non sélectif ou sélectif est efficace en ce sens qu'une utilisation d'un tel composé donne lieu à un taux de mortalité augmenté des adventices (% de mortalité des adventices) , notamment par rapport au butane-2,3-diol déjà connu pour son activité herbicide (voir le document KR201900477848).

En particulier, dans le cadre de la présente invention, il a été montré qu'une telle utilisation d'un composé de la famille des alcanediols comportant au moins 5 atomes de carbone comme herbicide total, non sélectif ou sélectif permet d'obtenir au moins un effet phytotoxique dont l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal.

Avantageusement, suivant l'utilisation selon l'invention, ledit composé de la famille des alcanediols comporte 5 à 20 atomes de carbone, préférentiellement 6 à 12 atomes de carbone. Selon l'invention, préférentiellement, ledit composé de la famille des alcanediols comporte 5 atomes de carbone ou 6 atomes de carbone ou 7 atomes de carbone ou 8 atomes de carbone ou 9 atomes de carbone ou 10 atomes de carbone ou 11 atomes de carbone ou 12 atomes de carbone ou 13 atomes de carbone ou 14 atomes de carbone ou 15 atomes de carbone ou 16 atomes de carbone ou 17 atomes de carbone ou 18 atomes de carbone ou 19 atomes de carbone ou 20 atomes de carbone.

En d'autres termes, suivant l'utilisation selon l'invention, préférentiellement, ledit composé de la famille des alcanediols est un composé en C₅ à C₂₀. Selon l'invention, avantageusement, ledit composé de la famille des alcanediols est un composé en C₅ ou un composé en C₆ ou un composé en C₇ ou un composé en C₈ ou un ou un composé en C₉ ou un composé en C₁₀ ou un composé en C₁₁ ou un composé en C₁₂ ou un composé en C₁₃ ou un composé en C₁₄ ou un composé en C₁₅ composé en C₁₆ ou un composé en C₁₇ ou un composé en C₁₈ ou un composé en C₁₉ ou un composé en C₂₀.

De préférence, suivant l'utilisation selon l'invention, ledit composé de la famille des alcanediols comportant au moins 5 atomes de carbone est un alcanediol linéaire ou cyclique ou ramifié.

A titre d'exemple, selon la présente invention, ledit composé de la famille des alcanediols peut être l'un des composés suivants : pentane-1,1-diol, pentane-1,2-diol, pentane-1,3-diol, pentane-1,4-diol, pentane-1,5-diol, pentane-2,2-diol, pentane-2,3-diol, pentane-2,4-diol, pentane-3,3-diol, hexane-1,1-diol, hexane-1,2-diol, hexane-1,3-diol, hexane-1,4-diol, hexane-1,5-diol, hexane-1,6-diol, hexane-2,2-diol, hexane-2,3-diol, hexane-2,4-diol, hexane-2,5-diol, hexane-3,3-diol, hexane-3,4-diol, heptane-1,1-diol, heptane-1,2-diol, heptane-1,3-diol, heptane-1,4-diol, heptane-1,5-diol, heptane-1,6-diol, heptane-1,7-diol, heptane-2,2-diol, heptane-2,3-diol, heptane-2,4-diol, heptane-2,5-diol, heptane-2,6-diol, heptane-3,3-diol, heptane-3,4-diol, heptane-3,5-diol, heptane-4,4-diol, octane-1,1-diol, octane-1,2-diol, octane-1,3-diol, octane-1,4-diol, octane-1,5-diol, octane-1,6-diol, octane-1,7-diol, octane-1,8-diol, octane-2,2-diol, octane-2,3-diol, octane-2,4-diol, octane-2,5-diol, octane-2,6-diol, octane-2,7-diol, octane-3,3-diol, octane-3,4-diol, octane-3,5-diol, octane-3,6-diol, octane-4,4-diol, octane-4,5-diol, nonane-1,1-diol, nonane-1,2-diol, nonane-1,3-diol, nonane-1,4-diol, nonane-1,5-diol, nonane-1,6-diol, nonane-1,7-diol, nonane-1,8-diol, nonane-1,9-diol, nonane-2,2-diol, nonane-2,3-diol, nonane-2,4-diol, nonane-2,5-diol, nonane-2,6-diol, nonane-2,7-diol, nonane-2,8-diol, nonane-3,3-diol, nonane-3,4-diol, nonane-3,5-diol, nonane-3,6-diol, nonane-3,7-diol, nonane-4,4-diol, nonane-4,5-diol, nonane-4,6-diol, nonane-5,5-diol, décane-1,1-diol, décane-1,2-diol, décane-1,3-diol, décane-1,4-diol, décane-1,5-diol, décane-1,6-diol, décane-1,7-diol, décane-1,8-diol, décane-1,9-diol, décane-1,10-diol, décane-2,2-diol, décane-2,3-diol, décane-2,4-diol, décane-2,5-diol, décane-2,6-diol, décane-2,7-diol, décane-2,8-diol, décane-2,9-diol, décane-3,3-diol, décane-3,4-diol, décane-3,5-diol, décane-3,6-diol, décane-3,7-diol, décane-3,8-diol, décane-4,4-diol, décane-4,5-diol, décane-4,6-diol, décane-4,7-diol, décane-5,5-diol, décane-5,6-diol, undécane-1,1-diol, undécane-1,2-diol, undécane-1,3-diol, undécane-1,4-diol, undécane-1,5-diol, undécane-1,6-diol, undécane-1,7-diol, undécane-1,8-diol, undécane-1,9-diol, undécane-1,10-diol, undécane-1,11-diol, undécane-2,2-diol, undécane-2,3-diol, undécane-2,4-diol, undécane-2,5-diol, undécane-2,6-diol, undécane-2,7-diol, undécane-2,8-diol, undécane-2,9-diol, undécane-2,10-diol, undécane-3,3-diol, undécane-3,4-diol, undécane-3,5-diol, undécane-3,6-diol, undécane-3,7-diol, undécane-3,8-diol, undécane-3,9-diol, undécane-4,4-diol, undécane-4,5-diol, undécane-4,6-diol, undécane-4,7-diol, undécane-4,8-diol, undécane-5,5-diol, undécane-5,6-diol, undécane-5,7-diol, undécane-6,6-diol, dodécane-1,1-diol, dodécane-1,2-diol, dodécane-1,3-diol, dodécane-1,4-diol, dodécane-1,5-diol, dodécane-1,6-diol, dodécane-1,7-diol, dodécane-1,8-diol, dodécane-1,9-diol,dodécane-1,10-diol,dodécane-1,11-diol,dodécane-1,12-diol, dodécane-2,2-diol, dodécane-2,3-diol, dodécane-2,4-diol, dodécane-2,5-diol, dodécane-2,6-diol, dodécane-2,7-diol, dodécane-2,8-diol, dodécane-2,9-diol, dodécane-2,10-diol, dodécane-2,11-diol, dodécane-3,3-diol, dodécane-3,4-diol, dodécane-3,5-diol, dodécane-3,6-diol, dodécane-3,7-diol, dodécane-3,8-diol, dodécane-3,9-diol, dodécane-3,10-diol, dodécane-4,4-diol, dodécane-4,5-diol, dodécane-4,6-diol, dodécane-4,7-diol, dodécane-4,8-diol, dodécane-4,9-diol, dodécane-5,5-diol, dodécane-5,6-diol, dodécane-5,7-diol, dodécane-5,8-diol, dodécane-6,6-diol, dodécane-6,7-diol, tridécane-1,1-diol, tridécane-1,2-diol, tridécane-1,3-diol, tridécane-1,4-diol, tridécane-1,5-diol, tridécane-1,6-diol, tridécane-1,7-diol, tridécane-1,8-diol, tridécane-1,9-diol, tridécane-1,10-diol, tridécane-1,11-diol, tridécane-1,12-diol, tridécane-1,13-diol, tridécane-2,2-diol, tridécane-2,3-diol, tridécane-2,4-diol, tridécane-2,5-diol, tridécane-2,6-diol, tridécane-2,7-diol, tridécane-2,8-diol, tridécane-2,9-diol, tridécane-2,10-diol, tridécane-2,11-diol, tridécane-2,12-diol, tridécane-3,3-diol, tridécane-3,4-diol, tridécane-3,5-diol, tridécane-3,6-diol, tridécane-3,7-diol, tridécane-3,8-diol, tridécane-3,9-diol, tridécane-3,10-diol, tridécane-3,11-diol, tridécane-4,4-diol, tridécane-4,5-diol, tridécane-4,6-diol, tridécane-4,7-diol, tridécane-4,8-diol, tridécane-4,9-diol, tridécane-4,10-diol, tridécane-5,5-diol, tridécane-5,6-diol, tridécane-5,7-diol, tridécane-5,8-diol, tridécane-5,9-diol, tridécane-6,6-diol, tridécane-6,7-diol, tridécane-6,8-diol, tridécane-7,7-diol, tétradécane-1,1-diol, tétradécane-1,2-diol, tétradécane-1,3-diol, tétradécane-1,4-diol, tétradécane-1,5-diol, tétradécane-1,6-diol, tétradécane-1,7-diol, tétradécane-1,8-diol, tétradécane-1,9-diol, tétradécane-1,10-diol, tétradécane-1,11-diol, tétradécane-1,12-diol, tétradécane-1,13-diol, tétradécane-1,14-diol, tétradécane-2,2-diol, tétradécane-2,3-diol, tétradécane-2,4-diol, tétradécane-2,5-diol, tétradécane-2,6-diol, tétradécane-2,7-diol, tétradécane-2,8-diol, tétradécane-2,9-diol, tétradécane-2,10-diol, tétradécane-2,11-diol, tétradécane-2,12-diol, tétradécane-2,13-diol, tétradécane-3,3-diol, tétradécane-3,4-diol, tétradécane-3,5-diol, tétradécane-3,6-diol, tétradécane-3,7-diol, tétradécane-3,8-diol, tétradécane-3,9-diol, tétradécane-3,10-diol, tétradécane-3,11-diol, tétradécane-3,12-diol, tétradécane-4,4-diol, tétradécane-4,5-diol, tétradécane-4,6-diol, tétradécane-4,7-diol, tétradécane-4,8-diol, tétradécane-4,9-diol, tétradécane-4,10-diol, tétradécane-4,11-diol, tétradécane-5,5-diol, tétradécane-5,6-diol, tétradécane-5,7-diol, tétradécane-5,8-diol, tétradécane-5,9-diol, tétradécane-5,10-diol, tétradécane-6,6-diol, tétradécane-6,7-diol, tétradécane-6,8-diol, tétradécane-6,9-diol, tétradécane-7,7-diol, tétradécane-7,8-diol, pentadécane-1,1-diol, pentadécane-1,2-diol, pentadécane-1,3-diol, pentadécane-1,4-diol, pentadécane-1,5-diol, pentadécane-1,6-diol, pentadécane-1,7-diol, pentadécane-1,8-diol, pentadécane-1,9-diol, pentadécane-1,10-diol, pentadécane-1,11-diol, pentadécane-1,12-diol, pentadécane-1,13-diol, pentadécane-1,14-diol, pentadécane-1,15-diol, pentadécane-2,2-diol, pentadécane-2,3-diol, pentadécane-2,4-diol, pentadécane-2,5-diol, pentadécane-2,6-diol, pentadécane-2,7-diol, pentadécane-2,8-diol, pentadécane-2,9-diol, pentadécane-2,10-diol, pentadécane-2,11-diol, pentadécane-2,12-diol, pentadécane-2,13-diol, pentadécane-2,14-diol, pentadécane-3,3-diol, pentadécane-3,4-diol, pentadécane-3,5-diol, pentadécane-3,6-diol, pentadécane-3,7-diol, pentadécane-3,8-diol, pentadécane-3,9-diol, pentadécane-3,10-diol, pentadécane-3,11-diol, pentadécane-3,12-diol, pentadécane-3,13-diol, pentadécane-4,4-diol, pentadécane-4,5-diol, pentadécane-4,6-diol, pentadécane-4,7-diol, pentadécane-4,8-diol, pentadécane-4,9-diol, pentadécane-4,10-diol, pentadécane-4,11-diol, pentadécane-4,12-diol, pentadécane-5,5-diol, pentadécane-5,6-diol, pentadécane-5,7-diol, pentadécane-5,8-diol, pentadécane-5,9-diol, pentadécane-5,10-diol, pentadécane-5,11-diol, pentadécane-6,6-diol, pentadécane-6,7-diol, pentadécane-6,8-diol, pentadécane-6,9-diol, pentadécane-6,10-diol, pentadécane-7,7-diol, pentadécane-7,8-diol, pentadécane-7,9-diol, pentadécane-8,8-diol, hexadécane-1,1-diol, hexadécane-1,2-diol, hexadécane-1,3-diol, hexadécane-1,4-diol, hexadécane-1,5-diol, hexadécane-1,6-diol, hexadécane-1,7-diol, hexadécane-1,8-diol, hexadécane-1,9-diol, hexadécane-1,10-diol, hexadécane-1,11-diol, hexadécane-1,12-diol, hexadécane-1,13-diol, hexadécane-1,14-diol, hexadécane-1,15-diol, hexadécane-1,16-diol, hexadécane-2,2-diol, hexadécane-2,3-diol, hexadécane-2,4-diol, hexadécane-2,5-diol, hexadécane-2,6-diol, hexadécane-2,7-diol, hexadécane-2,8-diol, hexadécane-2,9-diol, hexadécane-2,10-diol, hexadécane-2,11-diol, hexadécane-2,12-diol, hexadécane-2,13-diol, hexadécane-2,14-diol, hexadécane-2,15-diol, hexadécane-3,3-diol, hexadécane-3,4-diol, hexadécane-3,5-diol, hexadécane-3,6-diol, hexadécane-3,7-diol, hexadécane-3,8-diol, hexadécane-3,9-diol, hexadécane-3,10-diol, hexadécane-3,11-diol, hexadécane-3,12-diol, hexadécane-3,13-diol, hexadécane-3,14-diol, hexadécane-4,4-diol, hexadécane-4,5-diol, hexadécane-4,6-diol, hexadécane-4,7-diol, hexadécane-4,8-diol, hexadécane-4,9-diol, hexadécane-4,10-diol, hexadécane-4,11-diol, hexadécane-4,12-diol, hexadécane-4,13-diol, hexadécane-5,5-diol, hexadécane-5,6-diol, hexadécane-5,7-diol, hexadécane-5,8-diol, hexadécane-5,9-diol, hexadécane-5,10-diol, hexadécane-5,11-diol, hexadécane-5,12-diol, hexadécane-6,6-diol, hexadécane-6,7-diol, hexadécane-6,8-diol, hexadécane-6,9-diol, hexadécane-6,10-diol, hexadécane-6,11-diol, hexadécane-7,7-diol, hexadécane-7,8-diol, hexadécane-7,9-diol, hexadécane-7,10-diol, hexadécane-8,8-diol, hexadécane-8,9-diol, heptadécane-1,1-diol, heptadécane-1,2-diol, heptadécane-1,3-diol, heptadécane-1,4-diol, heptadécane-1,5-diol, heptadécane-1,6-diol, heptadécane-1,7-diol, heptadécane-1,8-diol, heptadécane-1,9-diol, heptadécane-1,10-diol, heptadécane-1,11-diol, heptadécane-1,12-diol, heptadécane-1,13-diol, heptadécane-1,14-diol, heptadécane-1,15-diol, heptadécane-1,16-diol, heptadécane-1,17-diol, heptadécane-2,2-diol, heptadécane-2,3-diol, heptadécane-2,4-diol, heptadécane-2,5-diol, heptadécane-2,6-diol, heptadécane-2,7-diol, heptadécane-2,8-diol, heptadécane-2,9-diol, heptadécane-2,10-diol, heptadécane-2,11-diol, heptadécane-2,12-diol, heptadécane-2,13-diol, heptadécane-2,14-diol, heptadécane-2,15-diol, heptadécane-2,16-diol, heptadécane-3,3-diol, heptadécane-3,4-diol, heptadécane-3,5-diol, heptadécane-3,6-diol, heptadécane-3,7-diol, heptadécane-3,8-diol, heptadécane-3,9-diol, heptadécane-3,10-diol, heptadécane-3,11-diol, heptadécane-3,12-diol, heptadécane-3,13-diol, heptadécane-3,14-diol, heptadécane-3,15-diol, heptadécane-4,4-diol, heptadécane-4,5-diol, heptadécane-4,6-diol, heptadécane-4,7-diol, heptadécane-4,8-diol, heptadécane-4,9-diol, heptadécane-4,10-diol, heptadécane-4,11-diol, heptadécane-4,12-diol, heptadécane-4,13-diol, heptadécane-4,14-diol, heptadécane-5,5-diol, heptadécane-5,6-diol, heptadécane-5,7-diol, heptadécane-5,8-diol, heptadécane-5,9-diol, heptadécane-5,10-diol, heptadécane-5,11-diol, heptadécane-5,12-diol, heptadécane-5,13-diol, heptadécane-6,6-diol, heptadécane-6,7-diol, heptadécane-6,8-diol, heptadécane-6,9-diol, heptadécane-6,10-diol, heptadécane-6,11-diol, heptadécane-6,12-diol, heptadécane-7,7-diol, heptadécane-7,8-diol, heptadécane-7,9-diol, heptadécane-7,10-diol, heptadécane-7,11-diol, heptadécane-8,8-diol, heptadécane-8,9-diol, heptadécane-8,10-diol, heptadécane-9,9-diol, octadécane-1,1-diol, octadécane-1,2-diol, octadécane-1,3-diol, octadécane-1,4-diol, octadécane-1,5-diol, octadécane-1,6-diol, octadécane-1,7-diol, octadécane-1,8-diol, octadécane-1,9-diol, octadécane-1,10-diol, octadécane-1,11-diol, octadécane-1,12-diol, octadécane-1,13-diol, octadécane-1,14-diol, octadécane-1,15-diol, octadécane-1,16-diol, octadécane-1,17-diol, octadécane-1,18-diol, octadécane-2,2-diol, octadécane-2,3-diol, octadécane-2,4-diol, octadécane-2,5-diol, octadécane-2,6-diol, octadécane-2,7-diol, octadécane-2,8-diol, octadécane-2,9-diol, octadécane-2,10-diol, octadécane-2,11-diol, octadécane-2,12-diol, octadécane-2,13-diol, octadécane-2,14-diol, octadécane-2,15-diol, octadécane-2,16-diol, octadécane-2,17-diol, octadécane-3,3-diol, octadécane-3,4-diol, octadécane-3,5-diol, octadécane-3,6-diol, octadécane-3,7-diol, octadécane-3,8-diol, octadécane-3,9-diol, octadécane-3,10-diol, octadécane-3,11-diol, octadécane-3,12-diol, octadécane-3,13-diol, octadécane-3,14-diol, octadécane-3,15-diol, octadécane-3,16-diol, octadécane-4,4-diol, octadécane-4,5-diol, octadécane-4,6-diol, octadécane-4,7-diol, octadécane-4,8-diol, octadécane-4,9-diol, octadécane-4,10-diol, octadécane-4,11-diol, octadécane-4,12-diol, octadécane-4,13-diol, octadécane-4,14-diol, octadécane-4,15-diol, octadécane-5,5-diol, octadécane-5,6-diol, octadécane-5,7-diol, octadécane-5,8-diol, octadécane-5,9-diol, octadécane-5,10-diol, octadécane-5,11-diol, octadécane-5,12-diol, octadécane-5,13-diol, octadécane-5,14-diol, octadécane-6,6-diol, octadécane-6,7-diol, octadécane-6,8-diol, octadécane-6,9-diol, octadécane-6,10-diol, octadécane-6,11-diol, octadécane-6,12-diol, octadécane-6,13-diol, octadécane-7,7-diol, octadécane-7,8-diol, octadécane-7,9-diol, octadécane-7,10-diol, octadécane-7,11-diol, octadécane-7,12-diol, octadécane-8,8-diol, octadécane-8,9-diol, octadécane-8,10-diol, octadécane-8,11-diol, octadécane-9,9-diol, octadécane-9,10-diol, nonadécane-1,1-diol, nonadécane-1,2-diol, nonadécane-1,3-diol, nonadécane-1,4-diol, nonadécane-1,5-diol, nonadécane-1,6-diol, nonadécane-1,7-diol, nonadécane-1,8-diol, nonadécane-1,9-diol, nonadécane-1,10-diol, nonadécane-1,11-diol, nonadécane-1,12-diol, nonadécane-1,13-diol, nonadécane-1,14-diol, nonadécane-1,15-diol, nonadécane-1,16-diol, nonadécane-1,17-diol, nonadécane-1,18-diol, nonadécane-1,19-diol, nonadécane-2,2-diol, nonadécane-2,3-diol, nonadécane-2,4-diol, nonadécane-2,5-diol, nonadécane-2,6-diol, nonadécane-2,7-diol, nonadécane-2,8-diol, nonadécane-2,9-diol, nonadécane-2,10-diol, nonadécane-2,11-diol, nonadécane-2,12-diol, nonadécane-2,13-diol, nonadécane-2,14-diol, nonadécane-2,15-diol, nonadécane-2,16-diol, nonadécane-2,17-diol, nonadécane-2,18-diol, nonadécane-3,3-diol, nonadécane-3,4-diol, nonadécane-3,5-diol, nonadécane-3,6-diol, nonadécane-3,7-diol, nonadécane-3,8-diol, nonadécane-3,9-diol, nonadécane-3,10-diol, nonadécane-3,11-diol, nonadécane-3,12-diol, nonadécane-3,13-diol, nonadécane-3,14-diol, nonadécane-3,15-diol, nonadécane-3,16-diol, nonadécane-3,17-diol, nonadécane-4,4-diol, nonadécane-4,5-diol, nonadécane-4,6-diol, nonadécane-4,7-diol, nonadécane-4,8-diol, nonadécane-4,9-diol, nonadécane-4,10-diol, nonadécane-4,11-diol, nonadécane-4,12-diol, nonadécane-4,13-diol, nonadécane-4,14-diol, nonadécane-4,15-diol, nonadécane-4,16-diol, nonadécane-5,5-diol, nonadécane-5,6-diol, nonadécane-5,7-diol, nonadécane-5,8-diol, nonadécane-5,9-diol, nonadécane-5,10-diol, nonadécane-5,11-diol, nonadécane-5,12-diol, nonadécane-5,13-diol, nonadécane-5,14-diol, nonadécane-5,15-diol, nonadécane-6,6-diol, nonadécane-6,7-diol, nonadécane-6,8-diol, nonadécane-6,9-diol, nonadécane-6,10-diol, nonadécane-6,11-diol, nonadécane-6,12-diol, nonadécane-6,13-diol, nonadécane-6,14-diol, nonadécane-7,7-diol, nonadécane-7,8-diol, nonadécane-7,9-diol, nonadécane-7,10-diol, nonadécane-7,11-diol, nonadécane-7,12-diol, nonadécane-7,13-diol, nonadécane-8,8-diol, nonadécane-8,9-diol, nonadécane-8,10-diol, nonadécane-8,11-diol, nonadécane-8,12-diol, nonadécane-9,9-diol, nonadécane-9,10-diol, nonadécane-9,11-diol, nonadécane-10,10-diol, eicosane-1,1-diol, eicosane-1,2-diol, eicosane-1,3-diol, eicosane-1,4-diol, eicosane-1,5-diol, eicosane-1,6-diol, eicosane-1,7-diol, eicosane-1,8-diol, eicosane-1,9-diol, eicosane-1,10-diol, eicosane-1,11-diol, eicosane-1,12-diol, eicosane-1,13-diol, eicosane-1,14-diol, eicosane-1,15-diol, eicosane-1,16-diol, eicosane-1,17-diol, eicosane-1,18-diol, eicosane-1,19-diol, eicosane-1,20-diol, eicosane-2,2-diol, eicosane-2,3-diol, eicosane-2,4-diol, eicosane-2,5-diol, eicosane-2,6-diol, eicosane-2,7-diol, eicosane-2,8-diol, eicosane-2,9-diol, eicosane-2,10-diol, eicosane-2,11-diol, eicosane-2,12-diol, eicosane-2,13-diol, eicosane-2,14-diol, eicosane-2,15-diol, eicosane-2,16-diol, eicosane-2,17-diol, eicosane-2,18-diol, eicosane-2,19-diol, eicosane-3,3-diol, eicosane-3,4-diol, eicosane-3,5-diol, eicosane-3,6-diol, eicosane-3,7-diol, eicosane-3,8-diol, eicosane-3,9-diol, eicosane-3,10-diol, eicosane-3,11-diol, eicosane-3,12-diol, eicosane-3,13-diol, eicosane-3,14-diol, eicosane-3,15-diol, eicosane-3,16-diol, eicosane-3,17-diol, eicosane-3,18-diol, eicosane-4,4-diol, eicosane-4,5-diol, eicosane-4,6-diol, eicosane-4,7-diol, eicosane-4,8-diol, eicosane-4,9-diol, eicosane-4,10-diol, eicosane-4,11-diol, eicosane-4,12-diol, eicosane-4,13-diol, eicosane-4,14-diol, eicosane-4,15-diol, eicosane-4,16-diol, eicosane-4,17-diol, eicosane-5,5-diol, eicosane-5,6-diol, eicosane-5,7-diol, eicosane-5,8-diol, eicosane-5,9-diol, eicosane-5,10-diol, eicosane-5,11-diol, eicosane-5,12-diol, eicosane-5,13-diol, eicosane-5,14-diol, eicosane-5,15-diol, eicosane-5,16-diol, eicosane-6,6-diol, eicosane-6,7-diol, eicosane-6,8-diol, eicosane-6,9-diol, eicosane-6,10-diol, eicosane-6,11-diol, eicosane-6,12-diol, eicosane-6,13-diol, eicosane-6,14-diol, eicosane-6,15-diol, eicosane-7,7-diol, eicosane-7,8-diol, eicosane-7,9-diol, eicosane-7,10-diol, eicosane-7,11-diol, eicosane-7,12-diol, eicosane-7,13-diol, eicosane-7,14-diol, eicosane-8,8-diol, eicosane-8,9-diol, eicosane-8,10-diol, eicosane-8,11-diol, eicosane-8,12-diol, eicosane-8,13-diol, eicosane-9,9-diol, eicosane-9,10-diol, eicosane-9,11-diol, eicosane-9,12-diol, eicosane-10,10-diol, eicosane-10,11-diol.

Préférentiellement, suivant l'utilisation selon l'invention, ledit composé de la famille des alcanediols comportant au moins 5 atomes de carbone est choisi dans le groupe constitué de l'hexane-1,2-diol, de l'octane-1,2-diol, du décane-1,2-diol, du dodécane-1,2-diol, du octane-1,8-diol, du nonane-1,9-diol, du pentane-1,2-diol, de l'hexane-1,6-diol, de l'hexane-2,5-diol, et de leurs mélanges.

Avantageusement, suivant l'utilisation selon l'invention, ledit composé de la famille des alcanediols comportant au moins 5 atomes de carbone est un alcanediol d'origine naturelle, par exemple un alcanediol bio-sourcé, ou un alcanediol étant un co-produit d'un procédé de synthèse chimique.

De façon particulièrement avantageuse, suivant l'utilisation selon l'invention, ledit composé de la famille des alcanediols comportant au moins 5 atomes de carbone est présent dans une formulation comprenant un solvent et/ou un co-formulant sélectionné dans le groupe comprenant les détergents, les émulsifiants, les surfactants ou tensioactifs, les dispersants, les agents anti-mousse, les activateurs de pénétration dans les tissus, végétaux, les humectants, les agents mouillants ioniques et non ioniques, les agents antioxydants, les épaississants, les tampons, les diluants, et leurs mélanges.

Préférentiellement, suivant l'utilisation selon l'invention, ledit composé de la famille des alcanediols comportant au moins 5 atomes de carbone est présent dans ladite formulation à raison de 0,01% à 50% en volume par rapport au volume total de ladite formulation, préférentiellement à raison de 0,5% à 10% en volume par rapport au volume total de ladite formulation, plus préférentiellement à raison de 1% à 5% en volume par rapport au volume total de ladite formulation.

Préférentiellement, suivant l'utilisation selon l'invention, ledit tensioactif ou surfactant est présent dans ladite formulation à raison de 0,01% à 20% en volume par rapport au volume total de ladite formulation, préférentiellement à raison de 0,1% à 10% en volume par rapport au volume total de ladite formulation, plus préférentiellement à raison de 0,5% à 5% en volume par rapport au volume total de ladite formulation.

De préférence, suivant l'utilisation selon l'invention, ledit solvent est sélectionné dans le groupe constitué de l'eau, des alcools, des cétones, des esters, des esters d'acides gras, des éthers, des polyols, des alcanes, des huiles végétales ou minérales, des huiles végétales modifiées, et de leurs mélanges.

Avantageusement, suivant l'utilisation selon l'invention, ledit tensioactif ou surfactant est choisi dans le groupe constitué des composés suivants : acide isooctadécanoïque, propane-1,2,3-triol, alginate de propylèneglycol, caprate de glycérol, caséine, cocoate de saccharose, dilaurate de glycérol, distéarate de poly(éthylène glycol), distéarate de saccharose, docosanamide, éther laurylique de polyoxyéthylène, éther monocétylique de polyéthylène glycol, éther monooctylique d'hexaéthylène glycol, éther monooleyl de polyéthylène glycol, hydroxyéthylcellulose, hydroxypropylméthylcellulose, lactate de cétyle, lécithine, monoglycérides de coco, monocapryline, monohydroxystéarate de glycérol, monolaurate de glycérol, monolaurate de sorbitane, monomyristin, monooléate de glycérol, monooléate de sorbitane, monopalmitate de sorbitan, myristate de myristyl, myristate d'isopropyle, octadécanoate de 2-[bis(2-hydroxyéthyl)amino]éthyle, oléate de décyle, palmitate d'isooctyle, 2-[2-hydroxyéthyl-[(*Z*)-octadec-9-enyl]amino]éthanol, polyoxyéthylèneglycol dodécyl éther, polysorbate 20, polysorbate 40, polysorbate 60, polysorbate 80, polysorbate 85, saponines, sesquioléate de sorbitane, stéarate de polyoxyéthylène, stéarate de saccharose, stéarate de sorbitane, tétrastéarate de pentaérythrityle, trilaurate de glycérol, trioléate de sorbitan, trioléine, tristéarate de glycérol, tristéarate de sorbitan, et leurs mélanges.

De préférence, suivant l'utilisation selon l'invention, ladite formulation comprend en outre au moins un composé additionnel présentant des propriétés herbicides, par exemple au moins un des composés suivants : 2,4-d, acide acétique, acide pélargonique, aclonifène, amidosulfuron, aminopyralide, béflubutamide, benfluraline, bentazone, bifenox, carbétamide, carfentrazone-éthyle, chlortoluron, cléthodime, clomazone, clopyralide, cloquintocet-mexyl, cycloxydime, cyprosulfamide, dicamba, dichloprop-p, diflufénican, dimethenamide-p, ethofumesate, fenoxaprop-p-éthyle, flazasulfuron, florasulam, fluazifop-p-butyle, flufenacet, fluroxypyr, foramsulfuron, glyphosate, halauxifène-méthyle, haloxyfop-p-méthyle, huile essentielle , imazamox, iodosulfuron-methyl-sodium, isoxaben, isoxadifène-éthyle, isoxaflutole, ienacile, MCPA, MCPB, mecoprop-p, mefenpyr-diéthyle, mésosulfuron-méthyle, mésotrione, métamitrone, métazachlore, métobromuron, métribuzine, metsulfuron-méthyle, napropamide, nicosulfuron, pénoxsulame, phenmédiphame, picolinafène, pinoxaden, propaquizafop, propoxycarbazone-na, prosulfocarbe, prosulfuron, pyraflufène-éthyle, pyridate, pyroxsulam, quinmérac, quizalofop-p-éthyle, s-métolaclore, sulcotrione, tembotrione, terbuthylazine, thiencarbazone-méthyl, thifensulfuron-méthyle, tribenuron-methyle, triclopyr, triflusulfuron-méthyle, tritosulfuron.

Avantageusement, suivant l'utilisation selon l'invention, ladite formulation se présente sous forme d'un liquide, sous forme d'un concentré liquide à diluer, sous forme d'une macro-émulsion, d'une micro-émulsion ou d'une nano-émulsion, sous forme d'une macro-émulsion concentrée à diluer, d'une micro-émulsion concentrée à diluer ou d'une nano-émulsion concentrée à diluer, sous forme d'une poudre, sous forme de granulés, de comprimés, de granulés ou d'une poudre mouillables ou encore sous forme d'un aérosol.

De préférence, suivant l'utilisation selon l'invention, ladite formulation se présentant sous forme d'un liquide, sous forme d'un concentré liquide à diluer, sous forme d'une macro-émulsion, d'une micro-émulsion ou d'une nano-émulsion, sous forme d'une macro-émulsion concentrée à diluer, d'une micro-émulsion concentrée à diluer ou d'une nano-émulsion concentrée à diluer ou sous forme d'un aérosol, présente des gouttes ayant une distribution de taille de gouttes D90 égale à 15 µm. Une telle distribution de taille de gouttes D90 a été déterminée dans le cadre de la présente invention comme étant adéquate afin d'assurer un effet phytotoxique, en particulier un effet herbicide, suffisant.

La présente invention porte également sur procédé comprenant :
- une application d'un composé de la famille des alcanediols comportant au moins 5 atomes de carbone sur au moins une partie d'un végétal, d'une semence ou d'un sol, et
- une obtention d'un effet herbicide total, non sélectif ou sélectif, en particulier une obtention d'un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal.

En particulier, la présente invention porte sur procédé comprenant :
- une application d'un alcanediol comportant au moins 5 atomes de carbone sur au moins une partie d'un végétal, d'une semence ou d'un sol, et
- une obtention d'un effet herbicide total, non sélectif ou sélectif, en particulier une obtention d'un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal.

Avantageusement, suivant le procédé selon l'invention, ladite application est effectuée sur l'entièreté du végétal et/ou les feuilles et/ou les fleurs et/ou les fruits et/ou les graines sur la plante et/ou les plantules et/ou les semis repiqués et/ou le matériel de multiplication tel que les semences, tubercules ou rhizomes, par pulvérisation, trempage, injection ou administration par des systèmes de fertilisation ou d'irrigation.

Préférentiellement, suivant le procédé selon l'invention, ladite application d'un composé de la famille des alcanediols comportant au moins 5 atomes de carbone sur au moins une partie d'un végétal, d'une semence ou d'un sol, est une application d'un composé de la famille des alcanediols comportant au moins 5 atomes de carbone choisi dans le groupe constitué de l'hexane-1,2-diol, de l'octane-1,2-diol, du décane-1,2-diol, du dodécane-1,2-diol, du octane-1,8-diol, du nonane-1,9-diol, du pentane-1,2-diol, de l'hexane-1,6-diol, de l'hexane-2,5-diol, et de leurs mélanges.

D'autres caractéristiques, détails et avantages de l'invention ressortiront des exemples donnés ci-après, à titre non limitatif et en faisant référence aux figures annexées.
La figure 1 illustre le % de mortalité du trèfle incarnat (*Trifolium incarnatum* L.) (stade 2-3 feuilles; stade BBCH 12-13) au cours du temps suite à l'application de différents composés de la famille des alcanediols selon l'invention.
La figure 2 illustre le % de mortalité du ray-grass anglais (*Lolium perenne* L.) (stade développé) au cours du temps suite à l'application de différents composés de la famille des alcanediols selon l'invention.
La figure 3 illustre le % de mortalité du trèfle incarnat (*Trifolium incarnatum* L.) (stade BBCH 16-17) au cours du temps suite à l'application de différents composés de la famille des alcanediols selon l'invention en comparaison avec le butane-2,3-diol.
La figure 4 illustre le % de mortalité du ray-grass anglais (*Lolium perenne* L.) (stade BBCH 16-17) au cours du temps suite à l'application de différents composés de la famille des alcanediols selon l'invention en comparaison avec le butane-2,3-diol.
La figure 5 illustre le % de mortalité du trèfle incarnat (*Trifolium incarnatum* L.) (stade BBCH 16-17) au cours du temps suite à l'application de différents composés de la famille des alcanediols selon l'invention en comparaison avec le butane-2,3-diol.
La figure 6 illustre le % de mortalité du ray-grass anglais (*Lolium perenne* L.) (stade BBCH 16-17) au cours du temps suite à l'application de différents composés de la famille des alcanediols selon l'invention en comparaison avec le butane-2,3-diol.

### Exemples

### Essai 1 : Utilisation de composés de la famille des alcanediols comme herbicide sur du trèfle - essai en post-émergence

Les composés de la famille des alcanediols suivants ont été testés comme herbicide sur du trèfle, en particulier sur du trèfle incarnat (*Trifolium incarnatum* L.) (stade 2-3 feuilles; stade BBCH 12-13) : hexane-1,2-diol (Sigma Aldrich); octane-1,2-diol (Sigma Aldrich); décane-1,2-diol (Sigma Aldrich) et dodécane-1,2-diol (Sigma Aldrich).

Ces quatre composés ont été formulés dans de l'eau comme solvent en présence d'un surfactant/tensioactif selon les % en volume (v/v) mentionnés au Tableau 1 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 1**

| | Alcanediol | Surfactant (1) | Eau | |
|---|---|---|---|---|
| Hexane-1,2-diol | 2% | 2% | 96% | n=5 |
| Octane-1,2-diol | 2% | 2% | 96% | n=5 |
| Décane-1,2-diol | 2% | 2% | 96% | n=5 |
| Dodécane-1,2-diol | 2% | 2% | 96% | n=5 |

| | | | | |
|---|---|---|---|---|
| (1) = Tween 20^{®} (Sigma Aldrich) | | | | |

Les compositions telles que reprises au Tableau 1 ont été testées par pulvérisation (100 ml/m²) sur des plants de trèfle incarnat (*Trifolium incarnatum* L.) (stade 2-3 feuilles; stade BBCH 12-13) à raison de 5 répétitions (n=5). Dans le cas présent, une répétition correspond à un pot comprenant 25 à 30 plants de trèfle. De l'eau a été pulvérisée (100 ml/m²) sur d'autres plants de trèfle incarnat (*Trifolium incarnatum* L.) (stade 2-3 feuilles; stade BBCH 12-13) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de trèfle.

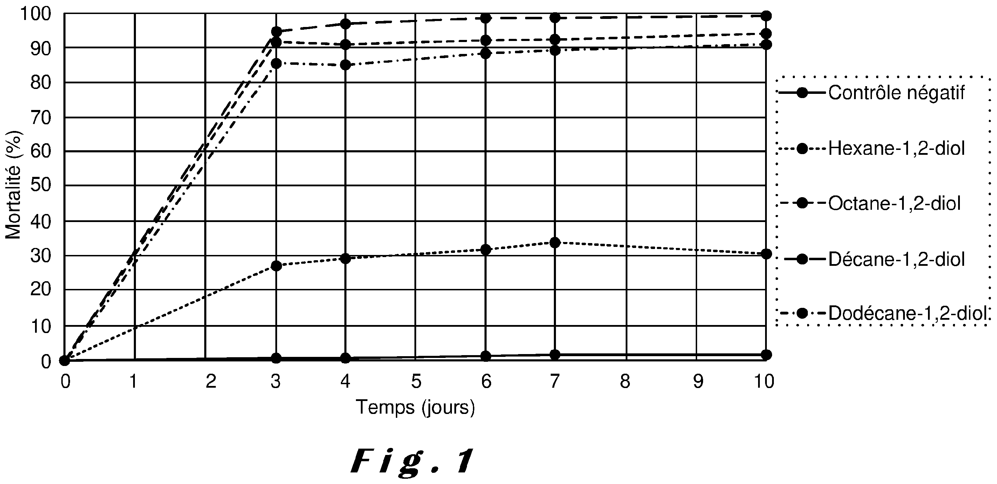

Les résultats obtenus sont présentés à la Figure 1. Comme on peut le constater, chacun des composés de la famille des alcanediols présente bien un effet herbicide sur du trèfle incarnat *(Trifolium incarnatum* L.) puisque des % de mortalité élevés et significativement différents du contrôle négatif ont été mesurés pour chacune des formulations.

### Essai 2 : Utilisation de composés de la famille des alcanediols comme herbicide sur du ray-grass anglais - essai en post-émergence

Les composés de la famille des alcanediols suivants ont été testés comme herbicide sur du ray-grass anglais (*Lolium perenne* L.) (stade développé) : hexane-1,2-diol (Sigma Aldrich); octane-1,2-diol (Sigma Aldrich); décane-1,2-diol (Sigma Aldrich) et dodécane-1,2-diol (Sigma Aldrich).

Ces quatre composés ont été formulés dans de l'eau comme solvent en présence d'un surfactant/tensioactif selon les % en volume (v/v) mentionnés au Tableau 2 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 2**

| | Alcanediol | Surfactant (1) | Eau | |
|---|---|---|---|---|
| Hexane-1,2-diol | 2% | 2% | 96% | n=5 |
| Octane-1,2-diol | 2% | 2% | 96% | n=5 |
| Décane-1,2-diol | 2% | 2% | 96% | n=5 |
| Dodécane-1,2-diol | 2% | 2% | 96% | n=5 |

| | | | | |
|---|---|---|---|---|
| (1) = Tween 20^{®} (Sigma Aldrich) | | | | |

Les compositions telles que reprises au Tableau 2 ont été testées par pulvérisation (100 ml/m²) sur des plants de ray-grass anglais (*Lolium perenne* L.) (stade développé) à raison de 5 répétitions (n=5). Dans le cas présent, une répétition correspond à un pot comprenant 40 à 45 plants de ray-grass anglais.

De l'eau a été pulvérisée (100 ml/m²) sur d'autres plants de ray-grass anglais (*Lolium perenne* L.) (stade développé) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de ray-grass anglais.

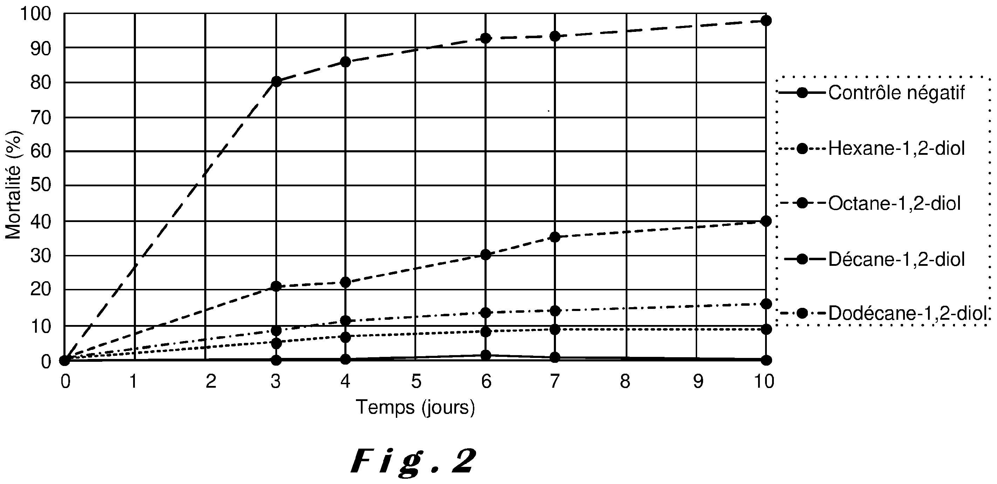

Les résultats obtenus sont présentés à la Figure 2. Comme on peut le constater, chacun des composés de la famille des alcanediols présente bien un effet herbicide sur du ray-grass anglais (*Lolium perenne* L.) puisque des % de mortalité significativement différents du contrôle négatif ont été mesurés pour chacune des formulations.

### Essai 3 : Utilisation de composés de la famille des alcanediols comme herbicide sur du trèfle - second essai en post-émergence

Les composés suivants ont été testés comme herbicide sur du trèfle, en particulier sur du trèfle incarnat (*Trifolium incarnatum* L.) (stade BBCH 16-17) : butane-2,3-diol (Sigma Aldrich), hexane-1,2-diol (Sigma Aldrich), octane-1,2-diol (Sigma Aldrich), décane-1,2-diol (Sigma Aldrich), dodécane-1,2-diol (Sigma Aldrich), octane-1,8-diol (Sigma Aldrich) et nonane-1,9-diol (Sigma Aldrich).

Ces sept composés ont été formulés dans de l'eau comme solvent en présence d'un surfactant/tensioactif selon les % en volume (v/v) mentionnés au Tableau 3 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 3**

| | Alcanediol | Surfactant (1) | Eau | |
|---|---|---|---|---|
| Butane-2,3-diol | 2% | 2% | 96% | n=5 |
| Hexane-1,2-diol | 2% | 2% | 96% | n=5 |
| Octane-1,2-diol | 2% | 2% | 96% | n=5 |
| Décane-1,2-diol | 2% | 2% | 96% | n=5 |
| Dodécane-1,2-diol | 2% | 2% | 96% | n=5 |
| Octane-1,8-diol | 2% | 2% | 96% | n=5 |
| Nonane-1,9-diol | 2% | 2% | 96% | n=5 |

| | | | | |
|---|---|---|---|---|
| (1) = Tween 20^{®} (Sigma Aldrich) | | | | |

Les compositions telles que reprises au Tableau 3 ont été testées par pulvérisation (100 ml/m²) sur des plants de trèfle incarnat (*Trifolium incarnatum* L.) (stade BBCH 16-17) à raison de 5 répétitions (n=5). Dans le cas présent, une répétition correspond à un pot comprenant 25 à 30 plants de trèfle.

De l'eau a été pulvérisée (100 ml/m²) sur d'autres plants de trèfle incarnat (*Trifolium incarnatum* L.) (stade BBCH 16-17) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de trèfle.

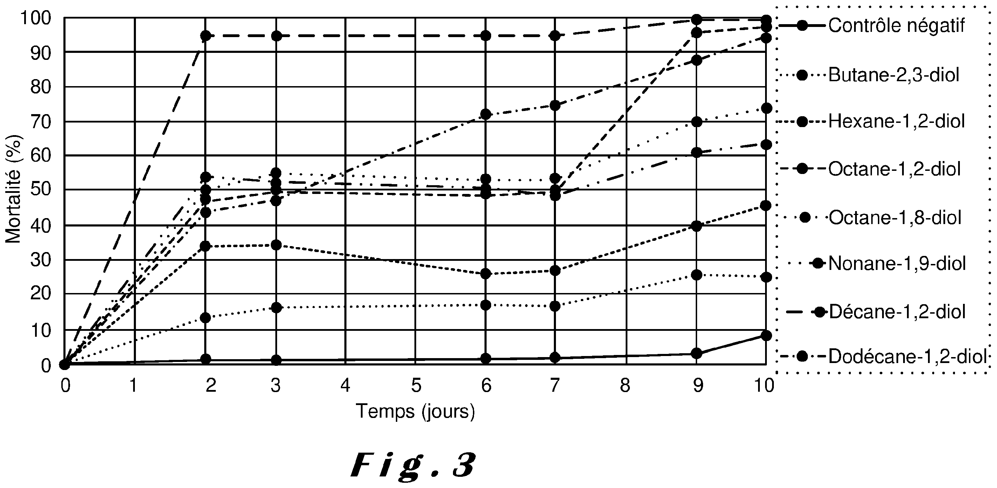

Les résultats obtenus sont présentés à la Figure 3. Comme on peut le constater, l'hexane-1,2-diol, l'octane-1,2-diol, le décane-1,2-diol, le dodécane-1,2-diol, l'octane-1,8-diol et le nonane-1,9-diol présentent systématiquement une activité herbicide augmentée sur du trèfle incarnat (*Trifolium incarnatum* L.) par rapport l'activité herbicide observée pour le butane-2,3-diol. En effet, les % de mortalité mesurés pour l'hexane-1,2-diol, l'octane-1,2-diol, le décane-1,2-diol, le dodécane-1,2-diol, l'octane-1,8-diol et le nonane-1,9-diol sont toujours plus élevés que pour le butane-2,3-diol.

En outre, chacun de ces composés de la famille des alcanediols présente bien un effet herbicide sur du trèfle incarnat (*Trifolium incarnatum* L.) puisque des % de mortalité significativement différents du contrôle négatif ont été mesurés pour chacune des formulations.

### Essai 4 : Utilisation de composés de la famille des alcanediols comme herbicide sur du ray-grass anglais - second essai en post-émergence

Les composés suivants ont été testés comme herbicide sur du ray-grass anglais (*Lolium perenne* L.) (stade BBCH 16-17) : butane-2,3-diol (Sigma Aldrich), hexane-1,2-diol (Sigma Aldrich), octane-1,2-diol (Sigma Aldrich), décane-1,2-diol (Sigma Aldrich), dodécane-1,2-diol (Sigma Aldrich), octane-1,8-diol (Sigma Aldrich) et nonane-1,9-diol (Sigma Aldrich).

Ces sept composés ont été formulés dans de l'eau comme solvent en présence d'un surfactant/tensioactif selon les % en volume (v/v) mentionnés au Tableau 4 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 4**

| | Alcanediol | Surfactant (1) | Eau | |
|---|---|---|---|---|
| Butane-2,3-diol | 2% | 2% | 96% | n=5 |
| Hexane-1,2-diol | 2% | 2% | 96% | n=5 |
| Octane-1,2-diol | 2% | 2% | 96% | n=5 |
| Décane-1,2-diol | 2% | 2% | 96% | n=5 |
| Dodécane-1,2-diol | 2% | 2% | 96% | n=5 |
| Octane-1,8-diol | 2% | 2% | 96% | n=5 |
| Nonane-1,9-diol | 2% | 2% | 96% | n=5 |

| | | | | |
|---|---|---|---|---|
| (1) = Tween 20^{®} (Sigma Aldrich) | | | | |

Les compositions telles que reprises au Tableau 4 ont été testées par pulvérisation (100 ml/m²) sur des plants de ray-grass anglais (*Lolium perenne* L.) (stade BBCH 16-17) à raison de 5 répétitions (n=5). Dans le cas présent, une répétition correspond à un pot comprenant 40 à 45 plants de ray-grass anglais.

De l'eau a été pulvérisée (100 ml/m²) sur d'autres plants de ray-grass anglais (*Lolium perenne* L.) (stade BBCH 16-17) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de ray-grass anglais.

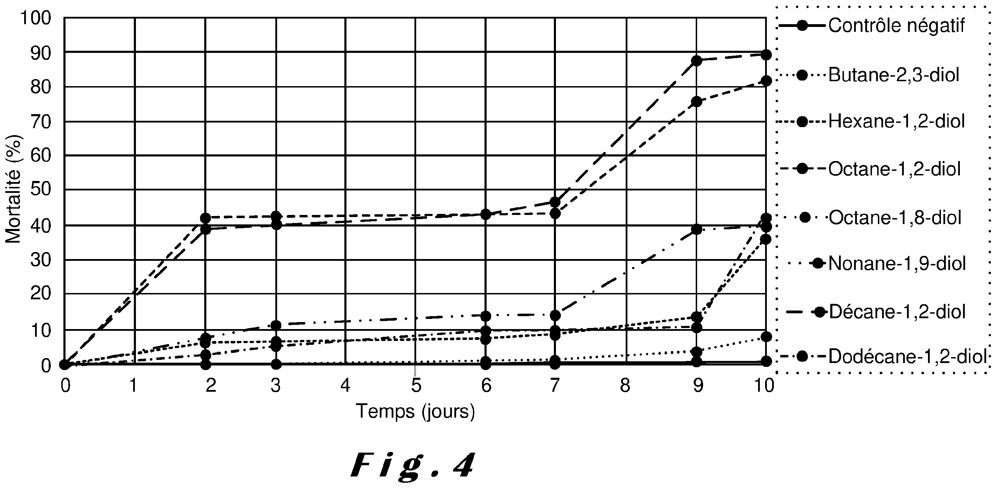

Les résultats obtenus sont présentés à la Figure 4. Comme on peut le constater, l'hexane-1,2-diol, l'octane-1,2-diol, le décane-1,2-diol, le dodécane-1,2-diol, l'octane-1,8-diol et le nonane-1,9-diol présentent systématiquement une activité herbicide augmentée sur du ray-grass anglais (*Lolium perenne* L.) par rapport l'activité herbicide observée pour le butane-2,3-diol. En effet, les % de mortalité mesurés pour l'hexane-1,2-diol, l'octane-1,2-diol, le décane-1,2-diol, le dodécane-1,2-diol, l'octane-1,8-diol et le nonane-1,9-diol sont toujours plus élevés que pour le butane-2,3-diol.

En outre, chacun de ces composés de la famille des alcanediols présente bien un effet herbicide sur le ray-grass anglais (*Lolium perenne* L.) puisque des % de mortalité significativement différents du contrôle négatif ont été mesurés pour chacune des formulations.

### Essai 5 : Utilisation de composés de la famille des alcanediols comme herbicide sur du trèfle - troisième essai en post-émergence

Les composés suivants ont été testés comme herbicide sur du trèfle, en particulier sur du trèfle incarnat (*Trifolium incarnatum* L.) (stade BBCH 16-17) : butane-2,3-diol (Sigma Aldrich), hexane-1,6-diol (Sigma Aldrich), hexane-2,5-diol (Sigma Aldrich) et pentane-1,2-diol (Sigma Aldrich).

Ces quatre composés ont été formulés dans de l'eau comme solvent en présence d'un surfactant/tensioactif selon les % en volume (v/v) mentionnés au Tableau 5 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 5**

| | Alcanediol | Surfactant (1) | Eau | |
|---|---|---|---|---|
| Butane-2,3-diol | 2% | 2% | 96% | n=5 |
| Hexane-1,6-diol | 2% | 2% | 96% | n=5 |
| Hexane-2,5-diol | 2% | 2% | 96% | n=5 |
| Pentane-1,2-diol | 2% | 2% | 96% | n=5 |

| | | | | |
|---|---|---|---|---|
| (1) = Tween 20^{®} (Sigma Aldrich) | | | | |

Les compositions telles que reprises au Tableau 5 ont été testées par pulvérisation (100 ml/m²) sur des plants de trèfle incarnat (*Trifolium incarnatum* L.) (stade BBCH 16-17) à raison de 5 répétitions (n=5). Dans le cas présent, une répétition correspond à un pot comprenant 25 à 30 plants de trèfle.

De l'eau a été pulvérisée (100 ml/m²) sur d'autres plants de trèfle incarnat (*Trifolium incarnatum* L.) (stade BBCH 16-17) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de trèfle.

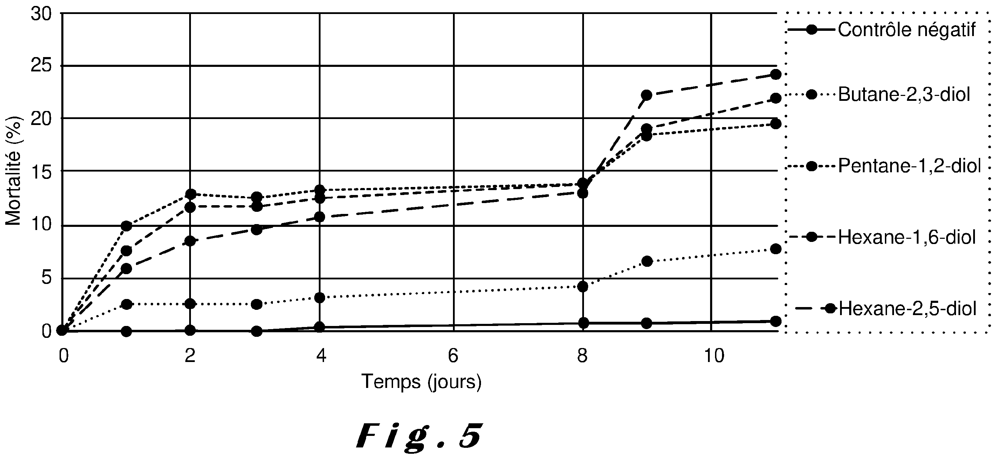

Les résultats obtenus sont présentés à la Figure 5. Comme on peut le constater, l'hexane-1,6-diol, l'hexane-2,5-diol et le pentane-1,2-diol présentent systématiquement une activité herbicide augmentée sur du trèfle incarnat (*Trifolium incarnatum* L.) par rapport l'activité herbicide observée pour le butane-2,3-diol. En effet, les % de mortalité mesurés pour l'hexane-1,6-diol, l'hexane-2,5-diol et le pentane-1,2-diol sont toujours plus élevés que pour le butane-2,3-diol.

En outre, chacun de ces composés de la famille des alcanediols présente bien un effet herbicide sur du trèfle incarnat (*Trifolium incarnatum* L.) puisque des % de mortalité significativement différents du contrôle négatif ont été mesurés pour chacune des formulations.

### Essai 6 : Utilisation de composés de la famille des alcanediols comme herbicide sur du ray-grass anglais - troisième essai en post-émergence

Les composés suivants ont été testés comme herbicide sur du ray-grass anglais (*Lolium perenne* L.) (stade BBCH 16-17) : butane-2,3-diol (Sigma Aldrich), hexane-1,6-diol (Sigma Aldrich), hexane-2,5-diol (Sigma Aldrich) et pentane-1,2-diol (Sigma Aldrich).

Ces quatre composés ont été formulés dans de l'eau comme solvent en présence d'un surfactant/tensioactif selon les % en volume (v/v) mentionnés au Tableau 6 ci-dessous.

En pratique, les formulations ont été formées par ajouts subséquents de l'alcanediol, du surfactant et de l'eau, une homogénéisation ayant été réalisée à l'aide d'un disperseur « T25 Ultra-turrax^{®} » avec un outil de dispersion « S25EC-T-C-25F » à 18000 rpm pendant deux minutes.

**Tableau 6**

| | Alcanediol | Surfactant (1) | Eau | |
|---|---|---|---|---|
| Butane-2,3-diol | 2% | 2% | 96% | n=5 |
| Hexane-1,6-diol | 2% | 2% | 96% | n=5 |
| Hexane-2,5-diol | 2% | 2% | 96% | n=5 |
| Pentane-1,2-diol | 2% | 2% | 96% | n=5 |

| | | | | |
|---|---|---|---|---|
| (1) = Tween 20^{®} (Sigma Aldrich) | | | | |

Les compositions telles que reprises au Tableau 6 ont été testées par pulvérisation (100 ml/m²) sur des plants de ray-grass anglais (*Lolium perenne* L.) (stade BBCH 16-17) à raison de 5 répétitions (n=5). Dans le cas présent, une répétition correspond à un pot comprenant 40 à 45 plants de ray-grass anglais.

De l'eau a été pulvérisée (100 ml/m²) sur d'autres plants de ray-grass anglais (*Lolium perenne* L.) (stade BBCH 16-17) (contrôle négatif).

Après traitement par les différentes compositions, les plants ont été maintenus sous les conditions suivantes : température de 25±5°C et HR (humidité relative) de 60±10%.

L'effet herbicide des différentes formulations a été évalué pendant 10 jours, ceci en termes de pourcentage de mortalité des plants de ray-grass anglais.

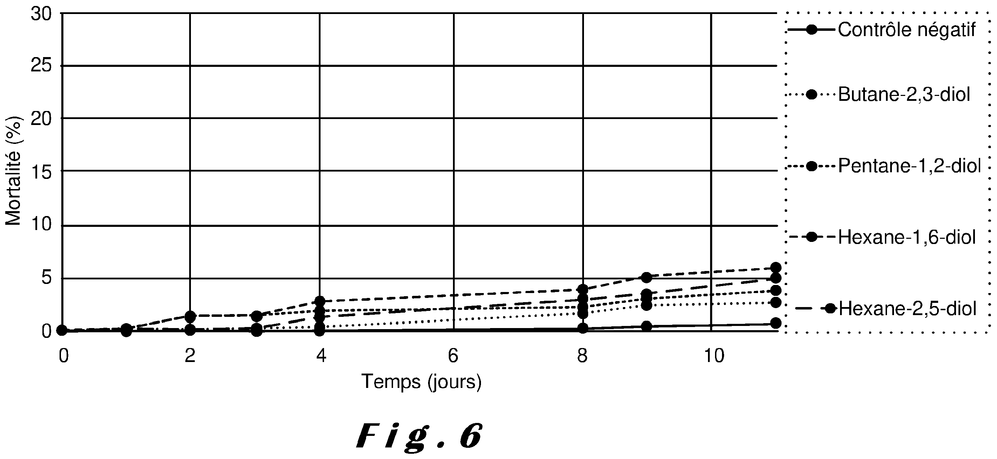

Les résultats obtenus sont présentés à la Figure 6. Comme on peut le constater, l'hexane-1,6-diol, l'hexane-2,5-diol et le pentane-1,2-diol présentent systématiquement une activité herbicide augmentée sur du ray-grass anglais (*Lolium perenne* L.) par rapport l'activité herbicide observée pour le butane-2,3-diol. En effet, les % de mortalité mesurés pour l'hexane-1,6-diol, l'hexane-2,5-diol et le pentane-1,2-diol sont toujours plus élevés que pour le butane-2,3-diol.

En outre, chacun de ces composés de la famille des alcanediols présente bien un effet herbicide sur le ray-grass anglais (*Lolium perenne* L.) puisque des % de mortalité significativement différents du contrôle négatif ont été mesurés pour chacune des formulations.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus.

L'usage des verbes « comprendre », « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « l' », pour introduire un élément n'exclut pas la présence d'une pluralité de ces éléments.

## Revendications

1. Utilisation d'un composé de la famille des alcanediols comme herbicide total, non sélectif ou sélectif, en particulier utilisation d'un composé de la famille des alcanediols comme herbicide total, non sélectif ou sélectif, pour obtenir un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal, ledit composé de la famille des alcanediols comportant au moins 5 atomes de carbone.

2. Utilisation selon la revendication 1, **caractérisée en ce que** ledit composé de la famille des alcanediols comportant au moins 5 atomes de carbone est un alcanediol linéaire ou cyclique ou ramifié.

3. Utilisation selon la revendication 1 ou 2, **caractérisée en ce que** ledit composé de la famille des alcanediols comportant au moins 5 atomes de carbone est choisi dans le groupe constitué de l'hexane-1,2-diol, de l'octane-1,2-diol, du décane-1,2-diol, du dodécane-1,2-diol, du octane-1,8-diol, du nonane-1,9-diol, du pentane-1,2-diol, de l'hexane-1,6-diol, de l'hexane-2,5-diol, et de leurs mélanges.

4. Utilisation selon l'une quelconque des revendications précédentes, **caractérisée en ce que** ledit composé de la famille des alcanediols comportant au moins 5 atomes de carbone est un alcanediol d'origine naturelle, par exemple un alcanediol bio-sourcé, ou un alcanediol étant un co-produit d'un procédé de synthèse chimique.

5. Utilisation selon l'une quelconque des revendications précédentes, **caractérisée en ce que** ledit composé de la famille des alcanediols comportant au moins 5 atomes de carbone est présent dans une formulation comprenant un solvent et/ou un co-formulant sélectionné dans le groupe comprenant les détergents, les émulsifiants, les surfactants ou tensioactifs, les dispersants, les agents anti-mousse, les activateurs de pénétration dans les tissus végétaux, les humectants, les agents mouillants ioniques et non ioniques, les agents antioxydants, les épaississants, les tampons, les diluants, et leurs mélanges.

6. Utilisation selon la revendication 5, **caractérisée en ce que** ledit composé de la famille des alcanediols comportant au moins 5 atomes de carbone est présent dans ladite formulation à raison de 0,01 % à 50% en volume par rapport au volume total de ladite formulation, préférentiellement à raison de 0,5% à 10% en volume par rapport au volume total de ladite formulation, plus préférentiellement à raison de 1% à 5% en volume par rapport au volume total de ladite formulation.

7. Utilisation selon la revendication 5 ou 6, **caractérisée en ce que** ledit tensioactif ou surfactant est présent dans ladite formulation à raison de 0,01% à 20% en volume par rapport au volume total de ladite formulation, préférentiellement à raison de 0,1% à 10% en volume par rapport au volume total de ladite formulation, plus préférentiellement à raison de 0,5% à 5% en volume par rapport au volume total de ladite formulation.

8. Utilisation selon l'une quelconque des revendications 5 à 7, **caractérisée en ce que** ledit solvent est sélectionné dans le groupe constitué de l'eau, des alcools, des cétones, des esters, des esters d'acides gras, des éthers, des polyols, des alcanes, des huiles végétales ou minérales, des huiles végétales modifiées, et de leurs mélanges.

9. Utilisation selon l'une quelconque des revendications 5 à 8, **caractérisée en ce que** ledit tensioactif ou surfactant est choisi dans le groupe constitué des composés suivants: acide isooctadécanoïque, propane-1,2,3-triol, alginate de propylèneglycol, caprate de glycérol, caséine, cocoate de saccharose, dilaurate de glycérol, distéarate de poly(éthylène glycol), distéarate de saccharose, docosanamide, éther laurylique de polyoxyéthylène, éther monocétylique de polyéthylène glycol, éther monooctylique d'hexaéthylène glycol, éther monooleyl de polyéthylène glycol, hydroxyéthylcellulose, hydroxypropylméthylcellulose, lactate de cétyle, lécithine, monoglycérides de coco, monocapryline, monohydroxystéarate de glycérol, monolaurate de glycérol, monolaurate de sorbitane, monomyristin, monooléate de glycérol, monooléate de sorbitane, monopalmitate de sorbitan, myristate de myristyl, myristate d'isopropyle, octadécanoate de 2-[bis(2-hydroxyéthyl)amino]éthyle, oléate de décyle, palmitate d'isooctyle, 2-[2-hydroxyéthyl-[(*Z*)-octadec-9-enyl]am ino]éthanol, polyoxyéthylèneglycol dodécyl éther, polysorbate 20, polysorbate 40, polysorbate 60, polysorbate 80, polysorbate 85, saponines, sesquioléate de sorbitane, stéarate de polyoxyéthylène, stéarate de saccharose, stéarate de sorbitane, tétrastéarate de pentaérythrityle, trilaurate de glycérol, trioléate de sorbitan, trioléine, tristéarate de glycérol, tristéarate de sorbitan, et leurs mélanges.

10. Utilisation selon l'une quelconque des revendications 5 à 9, **caractérisée en ce que** ladite formulation comprend en outre au moins un composé additionnel présentant des propriétés herbicides.

11. Utilisation selon l'une quelconque des revendications 5 à 10, **caractérisée en ce que** ladite formulation se présente sous forme d'un liquide, sous forme d'un concentré liquide à diluer, sous forme d'une macro-émulsion, d'une micro-émulsion ou d'une nano-émulsion, sous forme d'une macro-émulsion concentrée à diluer, d'une micro-émulsion concentrée à diluer ou d'une nano-émulsion concentrée à diluer, sous forme d'une poudre, sous forme de granulés, de comprimés, de granulés ou d'une poudre mouillables ou encore sous forme d'un aérosol.

12. Utilisation selon la revendication 11, **caractérisée en ce que** ladite formulation se présentant sous forme d'un liquide, sous forme d'un concentré liquide à diluer, sous forme d'une macro-émulsion, d'une micro-émulsion ou d'une nano-émulsion, sous forme d'une macro-émulsion concentrée à diluer, d'une micro-émulsion concentrée à diluer ou d'une nano-émulsion concentrée à diluer ou sous forme d'un aérosol, présente des gouttes ayant une distribution de taille de gouttes D90 égale à 15 µm.

13. Procédé comprenant :
- une application d'un composé de la famille des alcanediols comportant au moins 5 atomes de carbone sur au moins une partie d'un végétal, d'une semence ou d'un sol, et
- une obtention d'un effet herbicide total, non sélectif ou sélectif, en particulier une obtention d'un effet phytotoxique comprenant l'inhibition de la germination des semences ou la destruction des semences, l'inhibition de la reprise du développement souterrain ou aérien des méristèmes et des bourgeons ou la destruction des méristèmes et des bourgeons souterrains ou aériens, l'inhibition du développement et de la croissance des racines et/ou des rhizomes et/ou des tubercules et/ou des hypocotyles et/ou des épicotyles et/ou des plantules et/ou des parties aériennes d'un végétal ou la destruction des racines et/ou des rhizomes et/ou des tubercules et/ou des hypocotyles et/ou des épicotyles et/ou des plantules et/ou des parties aériennes d'un végétal.

14. Procédé selon la revendication 13, **caractérisé en ce que** ladite application est effectuée sur l'entièreté du végétal et/ou les feuilles et/ou les fleurs et/ou les fruits et/ou les graines sur la plante et/ou les plantules et/ou les semis repiqués et/ou le matériel de multiplication tel que les semences, tubercules ou rhizomes, par pulvérisation, trempage, injection ou administration par des systèmes de fertilisation ou d'irrigation.

15. Procédé selon la revendication 13 ou 14, **caractérisé en ce que** ladite application d'un composé de la famille des alcanediols comportant au moins 5 atomes de carbone sur au moins une partie d'un végétal, d'une semence ou d'un sol, est une application d'un composé de la famille des alcanediols comportant au moins 5 atomes de carbone choisi dans le groupe constitué de l'hexane-1,2-diol, de l'octane-1,2-diol, du décane-1,2-diol, du dodécane-1,2-diol, du octane-1,8-diol, du nonane-1,9-diol, du pentane-1,2-diol, de l'hexane-1,6-diol, de l'hexane-2,5-diol, et de leurs mélanges.

## Patentansprüche

1. Verwendung einer Verbindung der Familie der Alkandiole als nicht selektives oder selektives Totalherbizid, insbesondere Verwendung einer Verbindung der Familie der Alkandiole, als nicht selektives oder selektives Totalherbizid, zum Erhalten einer phytotoxischen Wirkung, umfassend die Hemmung der Keimung von Samenkörnern oder die Zerstörung von Samenkörnern, die Hemmung des Wiederauflebens der unterirdischen oder überirdischen Entwicklung von Meristemen und Knospen oder die Zerstörung von unterirdischen oder überirdischen Meristemen und Knospen, die Hemmung der Entwicklung und des Wachstums von Wurzeln und/oder Rhizomen und/oder Knollen und/oder Hypokotylen und/oder Epikotylen und/oder Keimlingen und/oder überirdischen Teilen einer Pflanze oder die Zerstörung von Wurzeln und/oder Rhizomen und/oder Knollen und/oder Hypokotylen und/oder Epikotylen und/oder Keimlingen und/oder überirdischen Teilen einer Pflanze, wobei die Verbindung der Familie der Alkandiole mindestens 5 Kohlenstoffatome umfasst.

2. Verwendung nach Anspruch 1, **dadurch gekennzeichnet, dass** die Verbindung der Familie der Alkandiole, die mindestens 5 Kohlenstoffatome umfasst, ein lineares oder zyklisches oder verzweigtes Alkandiol ist.

3. Verwendung nach Anspruch 1 oder 2, **dadurch gekennzeichnet, dass** die Verbindung der Familie der Alkandiole, die mindestens 5 Kohlenstoffatome umfasst, gewählt ist aus der Gruppe bestehend aus Hexan-1,2-diol, Octan-1,2-diol, Decan-1,2-diol, Dodecan-1,2-diol, Octan-1,8-diol, Nonan-1,9-diol, Pentan-1,2-diol, Hexan-1,6-diol, Hexan-2,5-diol und deren Mischungen.

4. Verwendung nach irgendeinem der vorstehenden Ansprüche, **dadurch gekennzeichnet, dass** die Verbindung der Familie der Alkandiole, die mindestens 5 Kohlenstoffatome umfasst, ein Alkandiol natürlichen Ursprungs, zum Beispiel ein biobasiertes Alkandiol, oder ein Alkandiol ist, das ein Nebenprodukt eines chemischen Syntheseverfahrens ist.

5. Verwendung nach irgendeinem der vorstehenden Ansprüche, **dadurch gekennzeichnet, dass** die Verbindung der Familie der Alkandiole, die mindestens 5 Kohlenstoffatome umfasst, in einer Formulierung vorhanden ist, die ein Lösungsmittel und/oder ein Co-Formulierungsmittel umfasst, ausgewählt aus der Gruppe umfassend Detergenzien, Emulgatoren, Tenside oder oberflächenaktive Mittel, Dispergiermittel, Antischaummittel, Penetrationsförderern für pflanzliche Gewebe, Feuchthaltemittel, ionische oder nicht ionische Benetzungsmittel, Antioxidationsmittel, Verdickungsmittel, Puffer, Verdünnungsmittel und deren Mischungen.

6. Verwendung nach Anspruch 5, **dadurch gekennzeichnet, dass** die Verbindung der Familie der Alkandiole, die mindestens 5 Kohlenstoffatome umfasst, in einer Menge von 0,01 Volumen-% bis 50 Volumen-% in Bezug auf das Gesamtvolumen der Formulierung, vorzugsweise in einer Menge von 0,5 Volumen-% bis 10 Volumen-% in Bezug auf das Gesamtvolumen der Formulierung, bevorzugter in einer Menge von 1 Volumen-% bis 5 Volumen-% in Bezug auf das Gesamtvolumen der Formulierung in der Formulierung vorhanden ist.

7. Verwendung nach Anspruch 5 oder 6, **dadurch gekennzeichnet, dass** das oberflächenaktive Mittel oder Tensid in einer Menge von 0,01 Volumen-% bis 20 Volumen-% in Bezug auf das Gesamtvolumen der Formulierung, vorzugsweise in einer Menge von 0,1 Volumen-% bis 10 Volumen-% in Bezug auf das Gesamtvolumen der Formulierung, bevorzugter in einer Menge von 0,5 Volumen-% bis 5 Volumen-% in Bezug auf das Gesamtvolumen der Formulierung in der Formulierung vorhanden ist.

8. Verwendung nach irgendeinem der Ansprüche 5 bis 7, **dadurch gekennzeichnet, dass** das Lösungsmittel ausgewählt ist aus der Gruppe bestehend aus Wasser, Alkoholen, Ketonen, Estern, Fettsäureestern, Ethern, Polyolen, Alkanen, Pflanzen- oder Mineralölen, modifizierten Pflanzenölen und deren Mischungen.

9. Verwendung nach irgendeinem der Ansprüche 5 bis 8, **dadurch gekennzeichnet, dass** das oberflächenaktive Mittel oder Tensid gewählt ist aus der Gruppe bestehend aus den folgenden Verbindungen: Isooctadecansäure, Propan-1,2,3-triol, Propylenglycolalginat, Glycerolcaprat, Casein, Saccharosecocoat, Glyceroldilaurat, Poly(ethylenglycol)distearat, Saccharosedistearat, Docosanamid, Polyoxyethylenlaurylether, Polyethylenglycolmonocetylether, Hexaethylenglycolmonooctylether, Polyethylenglycolmonooleylether, Hydroxyethylcellulose, Hydroxypropylmethylcellulose, Cetyllactat, Lecithin, Cocomonoglyceriden, Monocaprylin, Glycerolmonohydroxystearat, Glycerolmonolaurat, Sorbitanmonolaurat, Monomyristin, Glycerolmonooleat, Sorbitanmonooleat, Sorbitanmonopalmitat, Myristylmyristat, Isopropylmyristat, 2-[Bis(2-hydroxyethyl)amino]ethyloctadecanoat, Decyloleat, Isooctylpalmitat, 2-[2-Hydroxyethyl-[(Z)-octadec-9-enyl]amino]ethanol, Polyoxyethylenglycoldodecylether, Polysorbat 20, Polysorbat 40, Polysorbat 60, Polysorbat 80, Polysorbat 85, Saponinen, Sorbitansesquioleat, Polyoxyethylenstearat, Saccharosestearat, Sorbitanstearat, Pentaerythrityltetrastearat, Glyceroltrilaurat, Sorbitantrioleat, Triolein, Glyceroltristearat, Sorbitantristearat und deren Mischungen.

10. Verwendung nach irgendeinem der Ansprüche 5 bis 9, **dadurch gekennzeichnet, dass** die Formulierung ferner mindestens eine zusätzliche Verbindung umfasst, die Herbizideigenschaften aufweist.

11. Verwendung nach irgendeinem der Ansprüche 5 bis 10, **dadurch gekennzeichnet, dass** die Formulierung in Form einer Flüssigkeit, in Form einer konzentrierten Flüssigkeit zum Verdünnen, in Form einer Makroemulsion, einer Mikroemulsion oder einer Nanoemulsion, in Form einer konzentrierten Makroemulsion zum Verdünnen, einer konzentrierten Mikroemulsion zum Verdünnen oder einer konzentrierten Nanoemulsion zum Verdünnen, in Form eines Pulvers, in Form von Granulat, von Presslingen, von benetzbarem Granulat oder eines benetzbaren Pulvers oder sogar in Form eines Aerosols vorliegt.

12. Verwendung nach Anspruch 11, **dadurch gekennzeichnet, dass** die Formulierung, die in Form einer Flüssigkeit, in Form einer konzentrierten Flüssigkeit zum Verdünnen, in Form einer Makroemulsion, einer Mikroemulsion oder einer Nanoemulsion, in Form einer konzentrierten Makroemulsion zum Verdünnen, einer konzentrierten Mikroemulsion zum Verdünnen oder einer konzentrierten Nanoemulsion zum Verdünnen oder in Form eines Aerosols vorliegt, Tropfen mit einer Tropfengrößenverteilung D90 gleich 15 µm aufweist.

13. Verfahren, umfassend:
- ein Auftragen einer Verbindung der Familie der Alkandiole, die mindestens 5 Kohlenstoffatome umfasst, auf mindestens einen Teil einer Pflanze, eines Samenkorns oder eines Bodens und
- ein Erhalten einer nicht selektiven oder selektiven Totalherbizidwirkung, insbesondere ein Erhalten einer phytotoxischen Wirkung, umfassend die Hemmung der Keimung von Samenkörnern oder die Zerstörung von Samenkörnern, die Hemmung des Wiederauflebens der unterirdischen oder überirdischen Entwicklung von Meristemen und Knospen oder die Zerstörung von unterirdischen oder überirdischen Meristemen und Knospen, die Hemmung der Entwicklung und des Wachstums von Wurzeln und/oder Rhizomen und/oder Knollen und/oder Hypokotylen und/oder Epikotylen und/oder Keimlingen und/oder überirdischen Teilen einer Pflanze oder die Zerstörung von Wurzeln und/oder Rhizomen und/oder Knollen und/oder Hypokotylen und/oder Epikotylen und/oder Keimlingen und/oder überirdischen Teilen einer Pflanze.

14. Verwendung nach Anspruch 13, **dadurch gekennzeichnet, dass** das Auftragen auf die Gesamtheit der Pflanze und/oder der Blätter und/oder der Blüten und/oder der Früchte und/oder der Körner auf das Gewächs und/oder die Keimlinge und/oder die umgepflanzten Setzlinge und/oder das Vermehrungsmaterial wie Samenkörner, Knollen oder Rhizome durch Sprühen, Tränken, Injektion oder Verabreichung durch Dünge- oder Bewässerungssysteme durchgfeführt wird.

15. Verfahren nach Anspruch 13 oder 14, **dadurch gekennzeichnet, dass** das Auftragen einer Verbindung der Familie der Alkandiole, die mindestens 5 Kohlenstoffatome umfasst, auf mindestens einen Teil einer Pflanze, eines Samenkorns oder eines Bodens, ein Auftragen einer Verbindung der Familie der Alkandiole ist, die mindestens 5 Kohlenstoffatome umfasst, gewählt aus der Gruppe bestehend aus Hexan-1,2-diol, Octan-1,2-diol, Decan-1,2-diol, Dodecan-1,2-diol, Octan-1,8-diol, Nonan-1,9-diol, Pentan-1,2-diol, Hexan-1,6-diol, Hexan-2,5-diol und deren Mischungen.

## Claims

1. A use of a compound of the alkanediol family as a total, non-selective or selective herbicide, in particular a use of a compound of the alkanediol family as a total, non-selective or selective herbicide, to obtain a phytotoxic effect comprising the inhibition of the germination of the seeds or the destruction of the seeds, the inhibition of the resumption of the underground or aerial development of meristems and buds or the destruction of underground or aerial meristems and buds, the inhibition of the development and of the growth of the roots and/or rhizomes and/or tubers and/or hypocotyls and/or epicotyls and/or plantlets and/or aerial parts of a plant or the destruction of the roots and/or rhizomes and/or tubers and/or hypocotyls and/or epicotyls and/or plantlets and/or aerial parts of a plant, said compound of the alkanediol family comprising at least 5 carbon atoms.

2. The use according to claim 1, **characterized in that** said compound of the alkanediol family comprising at least 5 carbon atoms is a linear or cyclic or branched alkanediol.

3. The use according to claim 1 or 2, **characterized in that** said compound of the alkanediol family comprising at least 5 carbon atoms is chosen from the group consisting of hexane-1,2-diol, octane-1,2-diol, decane-1,2-diol, dodecane-1,2-diol, octane-1,8-diol, nonane-1,9-diol, pentane-1,2-diol, hexane-1,6-diol, hexane-2,5-diol, and mixtures thereof.

4. The use according to any one of the preceding claims, **characterized in that** said compound of the alkanediol family comprising at least 5 carbon atoms is an alkanediol of natural origin, for example a bio-sourced alkanediol, or an alkanediol being a co-product of a chemical synthesis method.

5. The use according to any one of the preceding claims, **characterized in that** said compound of the alkanediol family comprising at least 5 carbon atoms is present in a formulation comprising a solvent and/or a co-formulant selected from the group comprising detergents, emulsifiers, surfactants or tensioactives, dispersants, anti-foaming agents, penetration enhancers in the plant tissues, humectants, ionic and non-ionic wetting agents, antioxidants, thickeners, buffers, diluents, and mixtures thereof.

6. The use according to claim 5, **characterized in that** said compound of the family of alkanediols comprising at least 5 carbon atoms is present in said formulation in a proportion of 0.01% to 50% by volume relative to the total volume of said formulation, preferably in a proportion of 0.5% to 10% by volume relative to the total volume of said formulation, more preferably in a proportion of 1% to 5% by volume relative to the total volume of said formulation.

7. The use according to claim 5 or 6, **characterized in that** said tensioactive or surfactant is present in said formulation in a proportion of 0.01% to 20% by volume relative to the total volume of said formulation, preferably in a proportion of 0.1% to 10% by volume relative to the total volume of said formulation, more preferably in a proportion of 0.5% to 5% by volume relative to the total volume of said formulation.

8. The use according to any one of claims 5 to 7, **characterized in that** said solvent is selected from the group consisting of water, alcohols, ketones, esters, fatty acid esters, ethers, polyols, alkanes, vegetable or mineral oils, modified vegetable oils, and mixtures thereof.

9. The use according to any one of claims 5 to 8, **characterized in that** said tensioactive or surfactant is chosen from the group consisting of the following compounds: isooctadecanoic acid, propane-1,2,3-triol, propylene glycol alginate, glycerol caprate, casein, sucrose cocoate, glycerol dilaurate, poly(ethylene glycol) distearate, sucrose distearate, docosanamide, polyoxyethylene lauryl ether, polyethylene glycol monoketyl ether, hexaethylene glycol monooctyl ether, polyethylene glycol monooleyl ether, hydroxyethylcellulose, hydroxypropylmethylcellulose, cetyl lactate, lecithin, coconut monoglycerides, monocaprylin, glycerol monohydroxystearate, glycerol monolaurate, sorbitan monolaurate, monomyristin, glycerol monooleate, sorbitan monooleate, sorbitan monopalmitate, myristyl myristate, isopropyl myristate, 2-[bis(2-hydroxyethyl)amino]ethyl octadecanoate, decyl oleate, isooctyl palmitate, 2-[2-hydroxyethyl-[(Z)-octadec-9-enyl]amino]ethanol, polyoxyethylene glycol dodecyl ether, polysorbate 20, polysorbate 40, polysorbate 60, polysorbate 80, polysorbate 85, saponins, sorbitan sesquioleate, polyoxyethylene stearate, sucrose stearate, sorbitan stearate, pentaerythrityl tetrastearate, glycerol trilaurate, sorbitan trioleate, triolein, glycerol tristearate, sorbitan tristearate, and mixtures thereof.

10. The use according to any one of claims 5 to 9, **characterized in that** said formulation additionally comprises at least one additional compound exhibiting herbicidal properties.

11. The use according to any one of claims 5 to 10, **characterized in that** said formulation is in the form of a liquid, in the form of a liquid concentrate to be diluted, in the form of a macroemulsion, a microemulsion or a nanoemulsion, in the form of a concentrated macroemulsion to be diluted, of a concentrated microemulsion to be diluted or of a concentrated nanoemulsion to be diluted, in the form of a powder, in the form of granules, pills, wettable granules or powder or in the form of an aerosol.

12. The use according to claim 11, **characterized in that** said formulation is in the form of a liquid, in the form of a liquid concentrate to be diluted, in the form of a macroemulsion, a microemulsion or a nanoemulsion, in the form of a concentrated macroemulsion to be diluted, a concentrated microemulsion to be diluted or a concentrated nanoemulsion to be diluted or in the form of an aerosol, has drops with a drop size distribution D90 equal to 15 µm.

13. A method comprising:
- applying a compound from the alkanediol family comprising at least 5 carbon atoms to at least part of a plant, a seed or a soil, and
- obtaining a total, non-selective or selective herbicidal effect, in particular obtaining a phytotoxic effect comprising the inhibition of the germination of the seeds or the destruction of the seeds, the inhibition of the resumption of the underground or aerial development of the meristems and buds or the destruction of the underground or aerial meristems and buds, the inhibition of the development and of the growth of the roots and/or rhizomes and/or tubers and/or hypocotyls and/or epicotyls and/or plantlets and/or aerial parts of a plant or the destruction of the roots and/or rhizomes and/or tubers and/or hypocotyls and/or epicotyls and/or plantlets and/or aerial parts of a plant.

14. The method according to claim 13, **characterised in that** said application is performed on the entire plant and/or the leaves and/or the flowers and/or the fruits and/or the seeds on the plant and/or the plantlets and/or the transplanted seedlings and/or the propagation material such as seeds, tubers or rhizomes, by spraying, dipping, injection or administration by fertilisation or irrigation systems.

15. The method according to claim 13 or 14, **characterized in that** said application of a compound from the alkanediol family comprising at least 5 carbon atoms to at least part of a plant, a seed or a soil, is an application of a compound from the alkanediol family comprising at least 5 carbon atoms chosen from the group consisting of hexane-1,2-diol, octane-1,2-diol, decane-1,2-diol, dodecane-1,2-diol, octane-1,8-diol, nonane-1,9-diol, pentane-1,2-diol, hexane-1,6-diol, hexane-2,5-diol, and mixtures thereof.
